# EUROPÄISCHE PATENTANMELDUNG

(11) **EP 1 220 509 A1**
(43) Veröffentlichungstag der Anmeldung: **03.07.2002**
(21) Anmeldenummer: 00811257.5
(22) Anmeldetag: 29.12.2000
(51) Int. Cl.: H04L 29/06, H04M 3/00, H04L 12/64

(54) **Telekommunikationseinrichtung sowie Verfahren zur Datenübertragung**

(71) Anmelder: Ascom AG, 3000 Bern 14 (CH)
(72) Erfinder: Günther, Markus, 4573 Lohn (CH)
(74) Vertreter: Roshardt, Werner Alfred, Dipl.-Phys.

(57) **Zusammenfassung**

An eine Telekommunikationseinrichtung (1) sind eine Mehrzahl von Terminals (6.1, 6.3, 6.5, 6.6, 6.7) angeschlossen, wobei einige Terminals (6.5) direkt via Telefonleitungen, andere indirekt über ein fremdes Kommunikationsnetz, beispielsweise ein Stromversorgungsnetz (3) oder ein Ethernet-LAN (13), an die Telekommunikationseinrichtung angeschlossen sind. Die Verbindung von der Telekommunikationseinrichtung zum fremden Kommunikationsnetz wird über entsprechende Tk-Gateways (2.1, 2.2) realisiert. Die Terminals sind ihrerseits über entsprechende Terminal-Gateways (7.1, 7.3, 7.6, 7.7) an das Kommunikationsnetz angeschlossen. Die Kommunikation zwischen der Telekommunikationseinrichtung und den Terminals erfolgt mit bekannten proprietären oder standardisierten Telefonieprotokollen, welche nicht zur Datenübertragung über das Kommunikationsnetz geeignet sind. Damit den Terminals dennoch der volle Leistungsumfang der Telekommunikationseinrichtung zur Verfügung gestellt werden kann, wird das Telefonieprotokoll mittels Tunneling in einem für das Kommunikationsnetz geeigneten Übertragungsprotokoll transparent zur jeweiligen Gegenstelle übermittelt.

## Beschreibung

### Technisches Gebiet

Die Erfindung betrifft eine Telekommunikationseinrichtung, insbesondere eine Tk-Anlage, zur Übertragung von Daten zwischen der Telekommunikationseinrichtung und einer Mehrzahl von Terminals mittels einem ersten Übertragungsprotokoll.

### Stand der Technik

Moderne Telekommunikationseinrichtungen wie Telekommunikationsanlagen (Tk-Anlagen) Nebenstellenanlagen (NstA) oder Haustelefonzentralen (HTZ) unterstützen in der Regel eine Vielzahl verschiedener Protokolle und Standards der analogen und/oder digitalen Kommunikation. Sie stellen dem jeweiligen Benutzer eine Fülle an Leistungsmerkmalen zur Verfügung.

Die Installation und speziell die Verkabelung solcher Systeme sowie insbesondere deren Änderung ist typischerweise mit einem grossen Aufwand verbunden. Das Umrangieren von Apparaten und Einrichtungen (Terminals) beispielsweise bei Umzügen oder Umstrukturierungen von Betrieben ist sehr aufwendig und kostenintensiv, da jedes Terminal oder jede kleinere Terminalgruppe mit einer separaten Kabelverbindungen an die Telekommunikationseinrichtung angeschlossen werden muss.

Zur Lösung dieses Problems gibt es verschiedene Ansätze. So umgeht man die Verkabelung zu jedem einzelnen Terminal, indem man wie beispielsweise beim DECT Standard die Datenübertragung zum Terminal per Funk realisiert. Allerdings müssen auch in diesem Fall genügend Basisfunkstationen im gesamten abzudeckenden Bereich installiert werden, wobei die Basisfunkstationen wiederum per Kabel an die Telekommunikationseinrichtung angeschlossen werden.

Eine weitere Möglichkeit ist die Benutzung alternativer Kommunikationswege wie beispielsweise des Niederspannungs-Stromversorgungsnetzes zur Datenübertragung. So gibt es beispielsweise Gegensprechanlagen, welche ein Stromversorgungsnetz zur Datenübertragung verwenden. Weiter ist in der EP 0 445 375 ein Verfahren zur hausinternen Sprach- und Datenkommunikation über das hauseigene Stromversorgungsnetz beschrieben, wobei die Daten durch einfaches Ein- bzw. Austasten einer Trägerfrequenz von 109 kHz bzw. 131 kHz übertragen werden.

In der DE 34 07 308 ist ein Kommunikationssystem beschrieben, wobei die Verbindung der angeschlossenen Geräte untereinander unter Mitbenutzung des Stromversorgungsnetzes erfolgt.

Da es sich um analoge Systeme mit entsprechend geringen Bandbreiten handelt, ist es bei keiner dieser Lösungen jedoch möglich, eine erforderliche Vielzahl von Gesprächen gleichzeitig über die Telekommunikationseinrichtung zu führen oder das Kommunikationssystem mit annehmbarem Aufwand an digitale (z. B. ISDN) oder IP-basierte Netze (z. B. LAN, Internet) anzuschliessen. Ebensowenig kann den Benutzern der heute übliche Funktionsumfang einer Haustelefonzentrale, beispielsweise einer PBX (private branch exchange), zur Verfügung gestellt werden.

### Darstellung der Erfindung

Aufgabe der Erfindung ist es, eine Telekommunikationseinrichtung der genannten Art anzugeben, welche allen daran angeschlossenen Terminals das volle Leistungsspektrum zur Verfügung stellt und insbesondere ein einfaches und flexibles Ändern der Installation erlaubt.

Die Lösung der Aufgabe ist durch die Merkmale des Anspruchs 1 definiert. Eine erfindungsgemässe Telekommunikationseinrichtung, im folgenden mit TKE abgekürzt, beispielsweise eine Tk-Anlage, eine PBX, eine Telefonzentrale, eine SOHO (small office home office) Kommunikationseinrichtung oder eine ähnliche private Vermittlungseinrichtung für Telefonie- und/oder Datendienste, an welche eine Mehrzahl von Terminals angeschlossen sind, weist eine Schnittstelle zum Anschliessen an ein Kommunikationsnetz auf. Unter dem Begriff Terminal sollen im folgenden sämtliche Vorrichtungen wie analoge und/oder digitale, drahtgebundene wie auch drahtlos via eine Basisfunkstation kommunizierende Geräte wie Telefon- und Faxgeräte aber auch Computer oder andere Datenverarbeitungsgeräte verstanden werden, welche auch über direkte Leitungen an die TKE angeschlossen werden und mit dieser Daten austauschen können. Weiter ist im folgenden fast ausschliesslich von der Kommunikation zwischen der TKE und einem Terminal die Rede, wobei dies selbstverständlich auch die Kommunikation zweier oder mehrerer an die TKE angeschlossenen Terminals untereinander bzw. die Kommunikation eines an die TKE angeschlossenen Terminals mit einem an einem anderen Netz angeschlossenen Terminal, zu welchem eine Verbindung besteht, einschliesst.

Das Besondere an der TKE ist, dass die Kommunikation, d. h. die Übertragung der Daten, zwischen der TKE und den Terminals mittels einem ersten Übertragungsprotokoll und die Übertragung der Daten über das Kommunikationsnetz mittels einem zweiten Übertragungsprotokoll erfolgt, wobei die TKE zur Übertragung von Daten von der TKE zu einem Terminal, welches an dem Kommunikationsnetz angeschlossen ist, gemäss der Erfindung Mittel aufweist zur Ver- bzw. Entkapselung der Dateneinheiten des ersten Übertragungsprotokolls in die bzw. aus den Dateneinheiten des zweiten Übertragungsprotokolls. D. h. die zu übertragenden Daten werden transparent über das Kommunikationsnetz getunnelt.

Die Schnittstelle, welche die Anbindung der TKE an ein Kommunikationsnetz erlaubt, kann selbstverständlich auf die Eigenschaften dieses Kommunikationsnetzes abgestimmt und entsprechend optimiert werden. Als Kommunikationsnetz kommt prinzipiell jedes Netz in Frage, welches die Übertragung von Daten mit einer bestimmten minimalen Datenrate erlaubt. Insbesondere können sowohl die TKE wie auch die Terminals, welche mit der TKE kommunizieren sollen, an ein bereits bestehendes Netz angeschlossen werden und dessen Kommunikationswege zur Übertragung der Daten zwischen der TKE und den Terminals nutzen.

Da die zu übertragenden Daten über das Kommunikationsnetz getunnelt werden, können die gleichen Geräte, d. h. Terminals für alternative Installationsarten verwendet werden. Die Terminals können über einen entsprechenden Adapter, welcher das Tunneling auf der Terminalseite übernimmt, an das Kommunikationsnetz angeschlossen werden. D. h. das Terminal merkt gar nicht, dass zwischen ihm und der TKE ein "fremdes" Kommunikationsnetz mit einem "fremden" Übertragungsprotokoll liegt. Alternativ kann ein Terminal konventionell in einer Telefon-Installation verwendet und direkt, beispielsweise per Telefonleitung, an die TKE angeschlosssen werden.

Das Tunneling hat überdies den Vorteil, dass zur Kommunikation mit den angeschlossenen Terminals sämtliche von der TKE verwendeten standardisierten (z. B. ISDN) oder proprietären Protokolle weiter verwendet werden können, egal ob ein Terminal direkt oder über ein "fremdes" Kommunikationsnetz an die TKE angeschlossen ist. D. h. eine bestehende TKE kann auf einfache Art und Weise zur Kommunikation über ein "fremdes" Kommunikationsnetz erweitert werden.

Vorzugsweise ist die TKE zur Übertragung der Daten in Form von digitalen Signalen ausgebildet, wobei entsprechende standardisierte Übertragungsprotokolle wie beispielsweise ISDN oder proprietäre digitale Übertragungsprotokolle verwendet werden.

Mit Vorteil weist die TKE eine Schnittstelle auf, welche den Anschluss der TKE an ein Stromversorgungsnetz, beispielsweise ein Niederspannungs-Stromversorgungsnetz zur Verteilung des elektrischen Stromes innerhalb eines Gebäudes, ermöglicht. Dies ist insbesondere deshalb von Vorteil, weil praktisch jedes Gebäude, in welchem Personen wohnen oder arbeiten, über ein derartiges Stromversorgungsnetz verfügt.

Eine andere Art von Kommunikationsnetzen, welche weit verbreitet sind und an welche eine erfindungsgemässe TKE deshalb bevorzugt angeschlossen wird, sind paketorientierte Kommunikationsnetze wie etwa IP-basierte Netze, beispielsweise ein Ethernet-LAN (local area network) oder das Internet (bzw. ein firmeninternes Intranet).

Der Funktionsumfang den die TKE einem Benutzer zur Verfügung stellt, hängt typischerweise von der TKE bzw. den von ihr verwendeten Übertragungsprotokollen ab. Vorzugsweise ist die TKE bzw. die Schnittstelle zum Anschliessen an ein "fremdes" Kommunikationsnetz derart ausgebildet, dass einem Benutzer, dessen Terminal via dieses Kommunikationsnetz an der TKE angeschlossen ist, im Wesentlichen der gleiche, d. h. der volle Funktionsumfang der TKE zur Verfügung steht, wie einem Benutzer, dessen Terminal direkt an der TKE angeschlossen ist und deren Daten nicht über das Übertragungsprotokoll getunnelt werden müssen.

Um eine einfache Erweiterung bestehender TKEs zu ermöglichen, ist die Schnittstelle zum Anschliessen der TKE an ein Kommunikationsnetz in eine eigenständige Telekommunikations-Schnittstellenvorrichtung integriert, welche insbesondere als sogenanntes Plug-In Modul zum Einstecken in einen entsprechenden Steckplatz der TKE ausgebildet ist. Diese Telekommunikations-Schnittstellenvorrichtung umfasst neben der Schnittstelle auch die Mittel zum Tunneling, d. h. zur Kapselung des ersten im zweiten Übertragungsprotokoll.

Wie bereits erwähnt, werden die Terminals über einen Adapter, nachfolgend als Terminal-Schnittstellenvorrichtung bezeichnet, an das Kommunikationsnetz angeschlossen. Dieses weist analog der Telekommunikations-Schnittstellenvorrichtung ebenfalls Mittel zum Tunneling des ersten im zweiten Übertragungsprotokoll auf.

Die Terminal-Schnittstellenvorrichtung kann sowohl als externer Adapter ausgeführt, als auch in das Terminal integriert sein. wobei sie über entsprechende Schnittstellen zum Anschliessen an das Kommunikationsnetz bzw. zur Herstellung der notwendigen Verbindungen zum Terminal verfügt. Die Anbindung an das Kommunikationsnetz erfolgt typischerweise über Netzkabel mit Netzsteckern, welche in eine Netzsteckdose des Kommunikationsnetzes eingesteckt werden. Die Verbindung zur Terminal-Schnittstellenvorrichtung kann sowohl steckbar, als auch fest verbunden ausgeführt sein. Bei der Ausführung als Adapter werden die Verbindungen zum Terminal beispielsweise ebenfalls via entsprechende Kabel hergestellt, welche mit dem Adapter bzw. dem Terminal wahlweise fest verbunden oder in geeigneter Form eingesteckt werden können.

Zur Integration der Terminal-Schnittstellenvorrichtung in das Terminal ist diese beispielsweise als Steckmodul zum Einstecken in einen entsprechenden Steckplatz im Terminal ausgeführt oder sie ist als entsprechende Schaltung direkt auf einer Leiterplatte des Terminals ausgebildet. Entsprechend werden die notwendigen Verbindungen über ein geignetes Bussystem und/oder über Leiterbahnen hergestellt.

Vorzugsweise umfasst die Terminal-Schnittstellenvorrichtung neben einer Terminalschnittstelle zum Anschliessen des Terminals und einer Netzschnittstelle zum Anschliessen an das Kommunikationsnetz eine Datenschnittstelle zum Anschliessen eines Datenverarbeitungsgerätes. Hierbei handelt es sich beispielsweise um einen Computer, mit welchem die TKE bedient, beispielsweise konfiguriert werden kann oder welcher über das Kommunikationsnetz mit anderen daran angeschlossenen Computern kommunizieren kann. Die Datenschnittstelle ist beispielsweise als Ethernetschnittstelle, als Firewire Port oder als USB (universal serial Bus) Port ausgebildet.

Bei dem erfindungsgemässen Verfahren zur Übertragung von Daten von der TKE zu einem Terminal über ein Kommunikationsnetz liegen die Übertragungsfrequenzen zur Übertragung der Daten über das Kommunikationsnetz vorzugsweise im Frequenzbereich von über 1 MHz. Dies ermöglicht genügend hohe Datenübertragungsraten zur Realisierung einer störungsfreien Kommunikation zwischen der TKE und den Terminals bzw. es ermöglicht dem Terminal die Nutzung des vollen Funktionsumfangs der TKE.

Bei einer bevorzugten Variante dieses Verfahrens wird vor der Datenübertragung eine Anmeldeprozedur durchgeführt, wobei für jedes am Kommunikationsnetz angeschlossene Terminal, das mit der TKE kommunizieren möchte, eine Protokolladresse und eine Teilnehmeradresse vergeben wird.

Die Protokolladresse dient zur Identifizierung des Terminals bzw. der Terminal-Schnittstellenvorrichtung, über welche das Terminal an das Kommunikationsnetz angeschlossen ist, in diesem Kommunikationsnetz. Es wird beispielsweise jedem Terminal eine IP-Adresse zugewiesen.

Im Gegensatz dazu dient die Teilnehmeradresse nicht zur Identifikation des Terminals innerhalb des Kommunikationsnetzes, sondern zur Identifikation des Terminals bzw. seines Benutzers durch die TKE. D. h. die TKE weiss aufgrund der eindeutigen Teilnehmeradresse, welche Terminal-Schnittstellenvorrichtung angeschlossen ist und kann die Kommunikationsverbindungen entsprechend schalten.

Die Protokolladresse wird vorzugsweise automatisch vergeben. Hierzu kann beispielsweise ein sogenannter DHCP-Server (DHCP = dynamic host configuration protocol) in die Telekommunikations-Schnittstellenvorrichtung integriert werden. Dieser erlaubt eine automatische Protokoll-Adresszuteilung aller am Kommunikationsnetz angeschlossenen Terminals.

Im Gegensatz zur Protokolladresse wird die Teilnehmeradresse bevorzugt am Terminal selber eingestellt. Die Einstellung der Teilnehmeradresse kann sowohl hardwaremässig, beispielsweise mittels DIP-Schaltern oder Kurzschluss-Brücken, als auch softwaremässig, beispielsweise mit einem an der Datenschnittstelle angeschlossenen Computer erfolgen.

Bevor ein Benutzer ein Terminal zur Kommunikation mit der TKE bzw. mit anderen an die TKE angeschlossen Benutzern verwenden kann, wird vom Benutzer vorzugsweise eine Authentifizierung verlangt. Diese kann insbesondere durch Eingabe eines Passwortes, beispielsweise in Form eines PIN's (personal identification number) erfolgen. Es sind jedoch auch andere Verfahren zur Benutzerauthentifizierung wie beispielsweise eine Sprachanalyse möglich. Erst nach korrekter Authentifizierung des Benutzers wird das Terminal freigeschaltet und kann vom Benutzer verwendet werden. Diese Funktionalität wird typischerweise von der TKE zur Verfügung gestellt und gehört zu deren standardmässigen Funktionsumfang.

Selbstverständlich können die Daten des zweiten Übertragungsprotokolls zur Übertragung vom Terminal zur TKE bzw. umgekehrt mit Vorteil moduliert, codiert, komprimiert und/oder verschlüsselt werden, wobei es von den verwendeten Protokollen und Übertragungsnetzen abhängt, welche Techniken im Einzelnen angewendet werden können. Die verwendeten Techniken sind für die jeweiligen Systeme in der Regel bekannt.

Darüber hinaus kann die TKE in bekannter Art und Weise an ein öffentliches Netzwerk (public network) angeschlossen sein, wobei zur Datenübertragung vom bzw. zum öffentlichen Netz entsprechende Telefonieprotokolle (beispielsweise ISDN-T, ISDN-T2, analoge Protokolle usw.) verwendet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen:
- Fig. 1: Eine erfindungsgemässe Anordnung einer an einem Stromversorgungsnetz angeschlossenen Tk-Anlage;
- Fig. 2: eine an einem Ethernet angeschlossene Tk-Anlage;
- Fig. 3: den Verfahrensablauf beim Anschliessen der Tk-Anlage an ein Kommunikationsnetz;
- Fig. 4: den Verfahrensablauf beim Anschliessen eines Terminals an ein Kommunikationsnetz;
- Fig. 5: eine in Modul-Bauweise ausgebildete Tk-Anlage;
- Fig. 6: einen Tk-Gateway zum Anschliessen einer Tk-Anlage an ein Kommunikationsnetz;
- Fig. 7: einen Terminal-Gateway zum Anschliessen eines Terminals an ein Kommunikationsnetz und
- Fig. 8: den zur Kommunikation über das Kommunikationsnetz verwendeten Protokollstack.

Grundsätzlich sind in den Figuren gleiche Teile mit gleichen Bezugszeichen versehen.

### Wege zur Ausführung der Erfindung

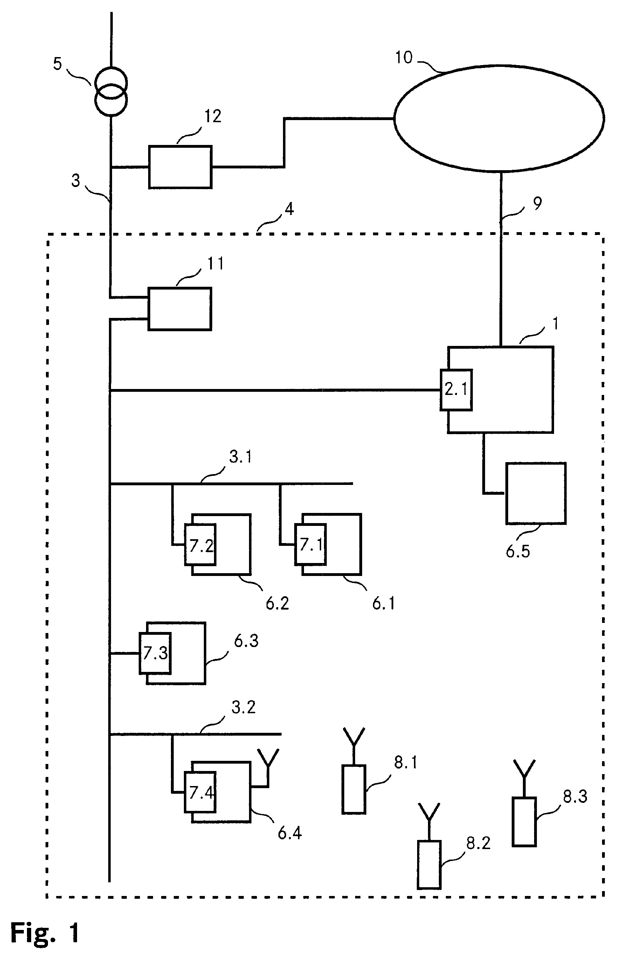

Figur 1 zeigt eine Tk-Anlage 1, welche über einen Tk-Gateway 2.1 an ein Stromversorgungsnetz 3 angeschlossen ist, wobei das Stromversorgungsnetz 3 beispielsweise zur Verteilung von Niederspannung (230 V mittels einer Phase bzw. 400 V mit drei Phasen) innerhalb des Gebäudes 4 dient. Das Stromversorgungsnetz 3 wird von einem Transformator 5 gespiesen. An die Tk-Anlage 1 sind eine Mehrzahl von Terminals 6.1, 6.2, 6.3, 6.4, 6.5 angeschlossen. Das Terminal 6.5 ist in bekannter Weise direkt, beispielsweise mittels einer Zwei- oder Vierdrahtleitung, an die Tk-Anlage 1 angeschlossen. Die Terminals 6.1 - 6.4 sind hingegen jeweils über einen Terminal-Gateway 7.1, 7.2, 7.3, 7.4 an das Stromversorgungsnetz 3 angeschlossen und via das Stromversorgungsnetz 3 mit der Tk-Anlage 1 verbunden. Die Terminals 6.1, 6.2 und 6.4 sind jeweils an einem Seitenzweig 3.1, 3.2 des Stromversorgungsnetzes 3 angeschlossen.

Bei den Terminals 6.1 - 6.5 handelt es sich wie bereits erwähnt jeweils um ein Gerät (Telefongerät, Basisfunkstation für Funktelefonsysteme beispielsweise nach dem DECT-, dem UMTS- oder einem anderen Standard, Faxgerät, Datenterminals, Computer etc.), welches zur Sprach- und/oder Datenkommunikation auch direkt an die Tk-Anlage angeschlossen werden könnte. Das Terminal 6.4 ist beispielsweise als Basisstation z.B. gemäss dem DECT-Standard ausgebildet und versorgt die DECT-Funktelefongeräte 8.1, 8.2, 8.3.

Die Tk-Anlage 1 ist über eine oder mehrere Telefonleitungen 9 an ein öffentliches Netz 10 wie beispielsweise das öffentliche Telefonnetz angeschlossen. Es können sowohl analoge als auch digitale Protokolle verwendet werden. Über das öffentliche Netz 10 sind selbstverständlich auch Verbindungen zu anderen daran angeschlossenen (nicht dargestellten) Kommunikationsnetzen wie beispielsweise das Internet möglich.

Ein weiterer Kommunikationsweg von der Tk-Anlage 1 zum öffentlichen Netz 10 führt über das Stromversorgungsnetz 3, wobei ein Inhouse-Koppler 11 die zu übertragenden Daten vom gebäudeinternen zum gebäudeexternen (bzw. umgekehrt) Bereich des Stromversorgungsnetzes 3 weiterleitet und der gebäudeexterne Bereich über einen Outdoor-Koppler 12 mit dem öffentlichen Netz 10 verbunden ist.

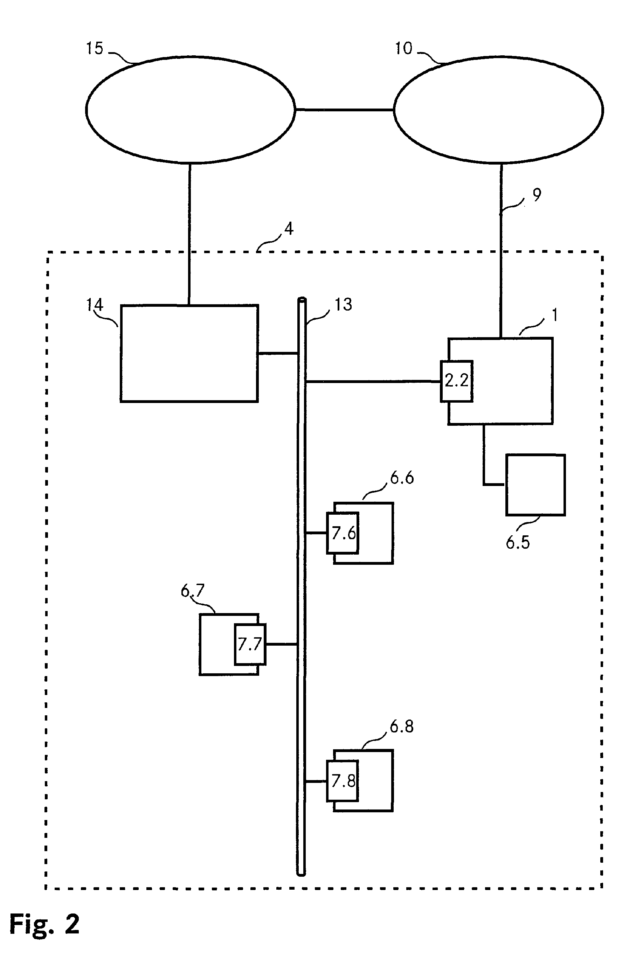

Figur 2 zeigt die Tk-Anlage 1, welche im Gegensatz zur Figur 1 nicht an ein Stromversorgungsnetz, sondern über den Tk-Gateway 2.2 an ein Ethernet-LAN 13 angeschlossen ist. Die Kommunikation zwischen der Tk-Anlage und den ebenfalls am Ethernet-LAN 13 angeschlossenen Terminals 6.6, 6.7, 6.8 erfolgt über dieses Ethernet-LAN 13, wobei die Terminals 6.6, 6.7, 6.8 jeweils über einen Terminal-Gateway 7.6, 7.7, 7.8 an das Ethernet-LAN 13 angeschlossen sind.

Auch in diesem Fall gibt es mehrere Kommunikationswege zum öffentlichen Netz 10. Einerseits in bekannter Weise via Telefonleitungen 9 und andererseits über einen am Ethernet-LAN 13 angeschlossenen Server 14, welcher beispielsweise über einen Internet Service Provider an das Internet 15 angeschlossen ist, das seinerseits an das öffentliche Netz 10 angebunden ist.

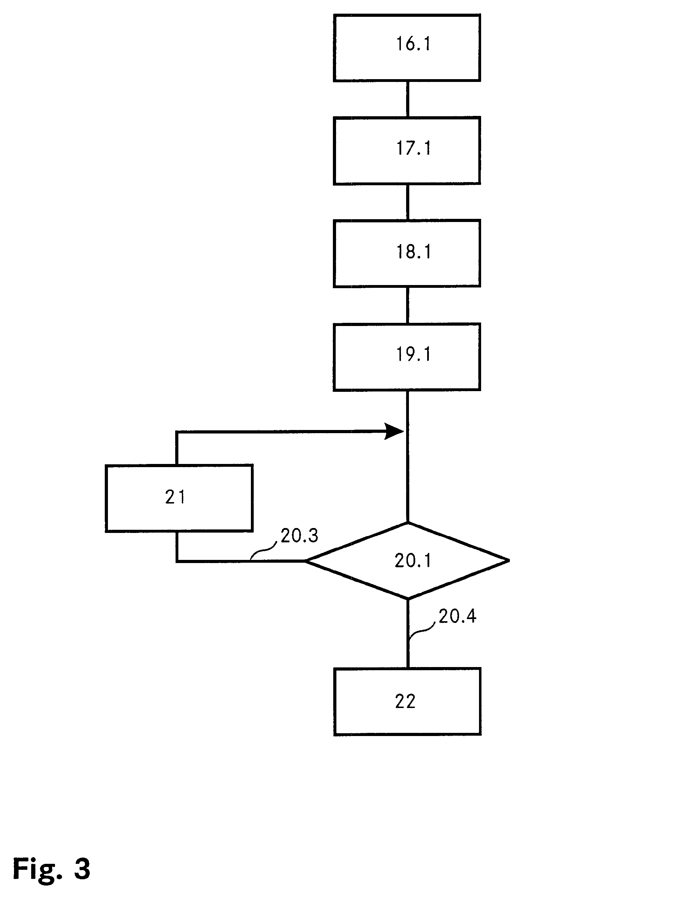

In Figur 3 ist das Verfahren dargestellt, wie es beim, respektive nach dem Anschliessen der Tk-Anlage 1 an ein Kommunikationsnetz, beispielsweise ein Stromversorgungsnetz 3 oder ein Ethernet-LAN 13, abläuft. Zunächst erfolgt die Verbindungsherstellung 16.1, wo eine Verbindung der Tk-Anlage 1 über einen Tk-Gateway 2.1, 2.2 mit dem Kommunikationsnetz hergestellt wird. Danach wird eine Initialisierung 17.1 des Tk-Gateways 2.1, 2.2 durchgeführt. Als nächster Schritt folgt die Protokolladressenzuteilung 18.1, beispielsweise mittels dem DHCP (dynamic host configuration protocol) Verfahren, bei welcher jedem am Kommunikationsnetz angeschlossenen Gateway automatisch eine Protokolladresse zugeteilt wird. Ist das DHCP Verfahren abgeschlossen, sendet die Tk-Anlage 1 bzw. der Tk-Gateway 2.1, 2.2 einen Netzwerkbroadcast 19.1 aus, womit alle bereits am Kommunikationsnetz angeschlossenen Terminal-Gateways 7.1 - 7.7 aufgefordert werden, sich bei der Tk-Anlage 1 bzw. beim Tk-Gateway 2.1, 2.2 anzumelden. Solange die Frage: Liegen von den Terminal-Gateways 7.1 - 7.7 Terminal-Antworten 20.1 vor? vom Tk-Gateway 2.1, 2.2 mit "Ja" 20.3 beantwortet werden kann, wird für jeden antwortenden Terminal-Gateway 7.1 - 7.7 die Anmeldung 21 durchgeführt. Diese erfolgt aufgrund der am jeweiligen Terminal-Gateway 7.1 - 7.7 eingestellten Teilnehmeradresse, anhand welcher die Tk-Anlage 1 jeden Terminal-Gateway 7.1 - 7.7 erkennt und diesem eine eindeutige Adresse zuteilt. Ist die Anmeldung der Terminal-Gateways 7.1 - 7.7 abgeschlossen, d. h. die Antwort ist "Nein" 20.4 geht die Tk-Anlage 1 in den normalen Telefoniebetrieb 22 über.

Ergänzend ist zu sagen, dass die Anmeldung 21 eines Terminal-Gateways 7.1 - 7.7 nur abgeschlossen wird, wenn die eingestellte Teilnehmeradresse eindeutig ist, d. h. wenn es diese Teilnehmeradresse nicht schon gibt. Zudem kann vorgesehen sein, dass ein Terminal-Gateway 7.1 - 7.7 erst dann von der Tk-Anlage 1 freigeschaltet wird, wenn sich dessen Benutzer korrekt, beispielsweise mittels Eingabe eines PIN's, identifiziert hat.

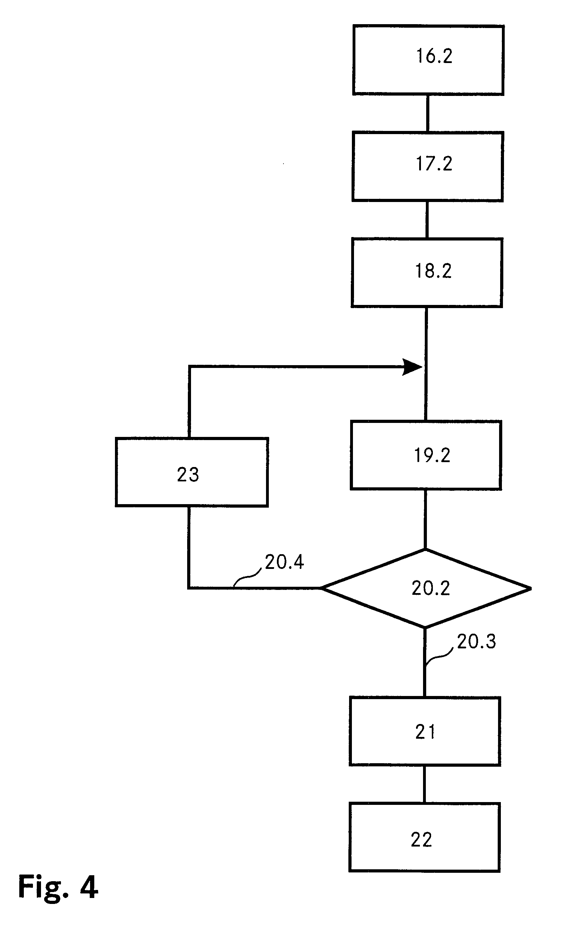

Figur 4 zeigt das Verfahren, wie es beim, respektive nach dem Anschliessen eines Terminal-Gateways 7.1 - 7.7 an das Kommunikationsnetz abläuft. Zunächst erfolgt wiederum die Verbindungsherstellung 16.2, wo eine Verbindung eines Terminals über einen Terminal-Gateway 7.1 - 7.7 mit dem Kommunikationsnetz hergestellt wird. Danach wird eine Initialisierung 17.2 des Terminal-Gateways 7.1 - 7.7 durchgeführt. Hierauf folgt die Protokolladressenzuteilung 18.2 ebenfalls mit dem DHCP Verfahren. Sobald dem Terminal-Gateway 7.1 - 7.7 eine Protokolladresse zugeteilt ist, sendet er einen Netzwerkbroadcast 19.2 aus, worin er seine Anwesenheit im Kommunikationsnetz bekannt gibt und sich bei der Tk-Anlage 1 anmelden möchte. Erhält er innerhalb einer bestimmten Wartezeit 23 keine Antwort vom Tk-Gateway 2.1, 2.2, d. h. ist die Antwort auf die Frage: Liegt vom Tk-Gateway 2.1, 2.2 eine Antwort vor? gleich "Nein" 20.4 wiederholt der Terminal-Gateway 7.1 - 7.7 seinen Netzwerkbroadcast 19.2. Sobald er vom Tk-Gateway 2.1, 2.2 eine Gatway-Antwort 20.2 erhält, d. h. die Antwort ist "Ja" 20.3, erfolgt die Anmeldung 21 und der Terminal-Gateway 7.1 - 7.7 wird bei der Tk-Anlage 1 registriert und ein entsprechender Benutzer anhand der eingestellten Teilnehmeradresse identifiziert. Danach wird vom Terminal-Gateway 7.1 - 7.7 der normale Telefoniebetrieb 22 aufgenommen.

Bei der Anmeldung eines Terminal-Gateways 7.1 - 7.7 bei der Tk-Anlage 1 wird der jeweilige Benutzer des daran angeschlossenen Terminals über die am Gateway eingestellte Teilnehmeradresse identifiziert. Zu diesem Zweck ist in der Tk-Anlage beispielsweise eine Teilnehmertabelle gespeichert, wo jeweils eine Teilnehmeradresse einem bestimmten Benutzer zugeordnet ist. Beim Anmelden wird der Tk-Anlage lediglich die am Gateway eingestellte Teilnehmeradresse übermittelt. Anhand der Teilnehmertabelle kann nun die Tk-Anlage den Benutzer identifizieren und weiss, an welchem Terminal (bzw. Terminal-Gateway) sich der Benutzer momentan aufhält. Auf diese Weise ist sichergestellt, dass die Tk-Anlage die für diesen Benutzer bestimmten Kommunikationsverbindungen auch korrekt, d. h. mit dem richtigen Terminal hergestellt werden können.

Auf diese Weise ist ein äusserst flexibles Telekommunikationssystem gegeben. Bei Installationen oder Installationsänderungen, beispielsweise bei Umorganisationen oder beim Umzug von Mitarbeitern sind keine Neu- oder Umverkabelungen bzw. Umkonfigurationen der Tk-Anlage mehr notwendig. Bei der Ausführung des Terminal-Gateways als eigenständiger Adapter kann jeder Benutzer einfach seinen eigenen Terminal-Gateway mitnehmen, am neuen Ort in gewohnter Weise an das Kommunikationsnetz und das zu verwendende Terminal am Gateway anschliessen und nach erfolgter Anmeldung sofort die Telekommunikationsdienste der Tk-Anlage nutzen. Ist der Terminal-Gateway in das Terminal integriert, kann der Benutzer selbstverständlich auch den ganzen Apparat (Terminal mit integriertem Gateway) mitnehmen und am neuen Ort in gewohnter Weise an das Kommunikationsnetz anschliessen. Oder der Benutzer, der am neuen Ort bereits einen eigenständigen oder in ein Terminal integrierten Terminal-Gateway vorfindet, stellt an diesem einfach seine eigene Teilnehmeradresse ein und schon kann die Tk-Anlage (nach korrekter Anmeldung des Terminal-Gateways) den Benutzer lokalisieren und ihm ihre Telekommunikationsdienste zur Nutzung zur Verfügung stellen. Je nach Detailausführung von Terminal und Terminal-Gateway ist das Vorgehen leicht unterschiedlich.

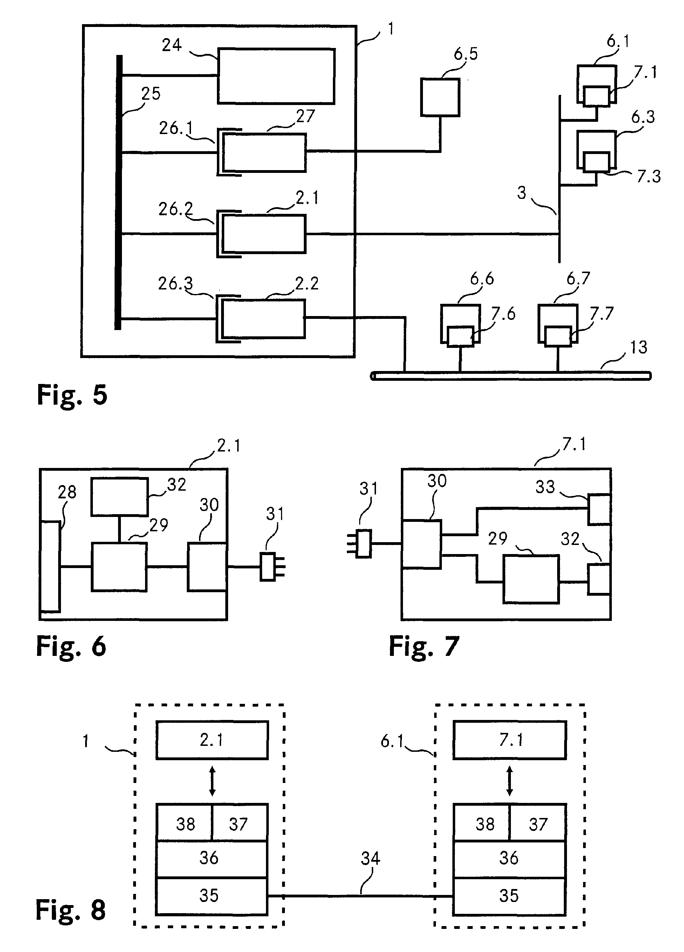

Figur 5 zeigt die Tk-Anlage 1 etwas detaillierter. Sie weist eine Zentraleinheit 24 zur Steuerung der Abläufe auf. Die Zentraleinheit 24 ist an ein Bussystem 25 angeschlossen, an welchem eine Mehrzahl von Steckplätzen 26.1, 26.2, 26.3 zum Einstecken bzw. Anschliessen verschiedener Module an die Tk-Anlage 1 ausgebildet sind. Selbstverständlich kann auch die Zentraleinheit 24 selbst über einen derartigen Steckplatz an das Bussystem 25 angeschlossen sein. Weitere Funktionseinheiten der Tk-Anlage 1 wie beispielsweise ein Koppelnetz oder der Anschluss an ein Stromversorgungsnetz zur Versorgung mit elektrischer Energie (beispielsweise das Stromversorgungsnetz 3) sind nicht dargestellt.

Im Steckplatz 26.1 ist ein Standard-Modul 27 eingesteckt, welches die Kommunikation zwischen der Tk-Anlage 1 und einem via einer Telefonleitung direkt an das Standard-Modul 27 angeschlossenen Terminal 6.5 erlaubt, wobei das proprietäre oder ein entsprechendes standardisiertes Kommunikationsprotokoll, im Folgenden Tk-Protokoll genannt, verwendet werden kann.

Im Steckplatz 26.2 ist ein Tk-Gateway 2.1 eingesteckt. Dieser ist wie bereits früher beschrieben an ein Stromversorgungsnetz 3 angeschlossen, an welchem via Terminal-Gateways 7.1, 7.3 Terminals 6.1, 6.3 angeschlossen sind. Zur Kommunikation zwischen der Tk-Anlage 1 und den Terminals 6.1, 6.3 wird wiederum das Tk-Protokoll verwendet. Hingegen muss zur Kommunikation über das Stromversorgungsnetz, d. h. zwischen dem Tk-Gateway 2.1 und den Terminal-Gateways 7.1, 7.3, ein spezielles Übertragungsprotokoll, im folgenden als Fremdprotokoll bezeichnet, verwendet werden, welches auf die Eigenschaften des Stromversorgungsnetzes 3 abgestimmt ist.

Das Gleiche gilt für die Kommunikation zwischen der Tk-Anlage 1 und den Terminals 6.6, 6.7, welche jeweils via einen Terminal-Gateway 7.6, 7.7 an ein Ethernet-LAN 13 angeschlossen sind. Diese Kommunikation erfolgt über den Tk-Gateway 2.2, der in den Steckplatz 26.3 eingesteckt ist und ebenfalls an das Ethernet-LAN 13 angeschlossen ist. Zur Kommunikation zwischen den Gateways über das Ethernet-LAN 13 existieren spezielle Protokolle, welche im Allgemeinen verschieden vom Tk-Protokoll sind.

Die Figur 6 zeigt schematisch den Aufbau des Tk-Gateways 2.1. Zum Anschliessen an die Tk-Anlage 1 weist er beispielsweise eine Steckerleiste 28 auf, mit welcher er in einen Steckplatz 26.1 - 26.3 der Tk-Anlage eingesteckt werden kann. Die zu übertragenden Daten, welche von der Tk-Anlage 1 mittels dem Tk-Protokoll angeliefert werden, werden in einer Tunnelingeinheit 29 in die Dateneinheiten des Fremdprotokolls eingepackt und zur Übermittlung über das Kommunikationsnetz aufbereitet. D. h. die Dateneinheiten des Tk-Protokolls werden in den Dateneinheiten des Fremdprotokolls transparent durch das Kommunikationsnetz getunnelt, empfängerseitig vom Terminal-Gateway rekonstruiert und schliesslich wieder zum ursprünglichen Tk-Protokoll zusammengesetzt. Analog wird in der Gegenrichtung verfahren.

Weiter weist der Tk-Gateway 2.1 eine Koppeleinheit 30 auf, mit welcher die Übertragungssignale in das Kommunikationsnetz, beispielsweise ein Stromversorgungsnetz eingekoppelt werden.

Zum Anschliessen an das Stromversorgungsnetz 3 weist der Tk-Gateway 2.1 eine Schnittstelle auf. Hierbei handelt es sich beispielsweise um einen gewöhnlichen, der Norm des Stromversorgungsnetzes 3 entsprechenden Netzstecker 31, der in eine passende Steckdose eingesteckt werden kann. Selbstverständlich kann die Anbindung des Tk-Gateways 2.1 an das Stromversorgungsnetz 3 auch über dieselben Verbindungen erfolgen, über welche die Tk-Anlage 1 mit elektrischem Strom versorgt wird. Die Verbindung von der Koppeleinheit 30 zum Stromversorgungsnetz kann beispielsweise über entsprechende Leitungen via Steckerleiste 28 über das Bussystem 25 erfolgen.

Weiter umfasst der Tk-Gateway 2.1 einen DHCP Server 32 zur automatischen Zuteilung der Protokolladressen der am Stromversorgungsnetz angeschlossenen Terminal-Gateways.

Einen Terminal-Gateway 7.1 zeigt Figur 7. Er umfasst ebenfalls einen Netzstecker 31 zum Anschliessen an das Stromversorgungsnetz, eine Koppeleinheit 30 zum Ein- bzw. Auskoppeln der Übertragungssignale in das bzw. aus dem Stromversorgungsnetz sowie eine Tunnelingeinheit 29 zum Ein- bzw. Auspacken der Dateneinheiten des Tk-Protokolls in die bzw. aus den Dateneinheiten des Fremdprotokolls.

An den Terminalanschluss 32, welcher beispielsweise als RJ 45 Schnittstelle ausgebildet ist, kann ein beliebiges Terminal angeschlossen werden. Weiter umfasst der Terminal-Gateway 7.1 einen Datenanschluss 33, an welchen beispielsweise ein Computer angeschlossen werden kann. Der Datenanschluss 33 kann als Ethernet-Schnittstelle, als Firewire-Port, als USB-Port oder als eine beliebige andere computertaugliche Schnittstelle ausgebildet sein.

Mit einem am Datenanschluss 33 angeschlossenen Computer kann auch die Tk-Anlage bedient werden. Hierzu werden die Steuerdaten vom Computer über das Stromversorgungsnetz zum Tk-Gateway und von diesem zur Zentraleinheit geleitet, wobei die Daten via die Tunnelingeinheit oder unter Umgehung der Tunnelingeinheit direkt als IP-Pakete an die Zentraleinheit weitergeleitet werden können. Zudem wird durch den Anschluss eines Computers mittels einer TAPI (telephony application program interface) eine Steuerung der Telefoniefunktionen aus Computeranwendungen heraus ermöglicht. Selbstverständlich sind auch sogenannte Softphones möglich, bei welchen ein Computer mit einer Multimediaeinheit (Mikrofon und Lautsprecher) in einen Telefonapparat umfunktioniert werden kann.

Selbstverständlich kann auch der Terminal-Gateway 7.1 über den Netzstecker 31 mit elektrischem Strom aus dem Stromversorgungsnetz 3 gespiesen werden. D. h. über das entsprechende Anschlusskabel werden nicht nur die Daten, sondern wird auch gleichzeitig elektrische Leistung zum Betreiben des Terminal-Gateways 7.1 übertragen. In diesem Fall ist ein Ortswechsel eines Benutzers besonders einfach, da dieser nur seinen Terminal-Gateway am alten Ort aus- und am neuen Ort in eine Netzsteckdose einzustecken braucht.

Eine Speisung direkt aus dem Stromversorgungsnetz ist natürlich auch für den Tk-Gateway 2.1 möglich, wobei dieser in der Regel von der Tk-Anlage 1 her mit Strom versorgt wird. Es wäre jedoch auch möglich, die gesamte Tk-Anlage 1 über den Netzstecker 31 des Tk-Gateways 2.1 mit Strom zu versorgen.

In Figur 8 ist der Protokollstack dargestellt, wie er zur Datenübertragung von der Tk-Anlage 1 bzw. einem Tk-Gateway über ein Kommunikationsnetz 34 zu einem Terminal 6.1 bzw. einem Terminal-Gateway und natürlich auch in umgekehrter Richtung, verwendet wird. Dieser Protokollstack umfasst jeweils eine Transportschicht 35, welche die Daten über das Transportmedium, im vorliegenden Fall das Kommunikationsnetz 34 übermittelt. Darüber liegt das IP 36 (internet-protocol) und darüber das TCP 37 (transmission control protocol) sowie das UDP 38 (user datagram protocol).

In diesem Protokollstack werden die Telefonieprotokolldaten (z. B. ISDN-Daten) der Tk-Anlage 1 bzw. einem Terminal 6.1 getunnelt.

Um die zur Verfügung stehende Bandbreite optimal nutzen zu können, können die Daten mit entsprechenden Verfahren vor der Übertragung verlustfrei komprimiert werden.

Zusammenfassend ist festzustellen, dass es die Erfindung erlaubt, bekannte Telekommunikationseinrichtungen auf einfache Art und Weise derart zu erweitern, dass die Installation sowie Änderungen der Installation einfach und flexibel durchgeführt werden können. Dies wird erreicht, indem die Telekommunikationseinrichtung bzw. die entsprechenden Terminals mit Erweiterungsmodulen an bereits vorhandene Kommunikationsnetze angeschlossen werden ohne gleichzeitig den den Terminals zur Verfügung stehenden Funktionsumfang der Telekommunikationseinrichtung einzuschränken.

## Patentansprüche

1. Telekommunikationseinrichtung, insbesondere Tk-Anlage, zur Übertragung von Daten zwischen der Telekommunikationseinrichtung und einer Mehrzahl von Terminals mittels einem ersten Übertragungsprotokoll, **dadurch gekennzeichnet, dass** die Telekommunikationseinrichtung eine Schnittstelle aufweist zum Anschliessen an ein Kommunikationsnetz zur Übertragung von Daten mittels einem zweiten Übertragungsprotokoll, wobei zur Übertragung von Daten von bzw. zu einem dieser Terminals, welches am Kommunikationsnetz angeschlossen ist, Mittel zum Tunneln des ersten Übertragungsprotokolls in dem zweiten Übertragungsprotokoll vorgesehen sind.

2. Telekommunikationseinrichtung nach Anspruch 1, **dadurch gekennzeichnet, dass** sie zur Übertragung von Daten in Form von digitalen Signalen ausgebildet ist.

3. Telekommunikationseinrichtung nach Anspruch 1 oder 2, **dadurch gekennzeichnet, dass** das Kommunikationsnetz ein Stromversorgungsnetz ist.

4. Telekommunikationseinrichtung nach Anspruch 1 oder 2, **dadurch gekennzeichnet, dass** das Kommunikationsnetz ein paketorientiertes, insbesondere ein IP-basiertes Kommunikationsnetz ist.

5. Telekommunikationseinrichtung nach einem der Ansprüche 1 bis 4 mit einem vorgegebenen Funktionsumfang, **dadurch gekennzeichnet, dass** dem über das Kommunikationsnetz angeschlossenen Terminal im Wesentlichen der volle Funktionsumfang zur Verfügung steht.

6. Telekommunikations-Schnittstellenvorrichtung für eine Telekommunikationseinrichtung nach einem der Ansprüche 1 bis 5, **dadurch gekennzeichnet, dass** sie die Schnittstelle zum Anschliessen an das Kommunikationsnetz sowie die Mittel zum Tunneln des ersten Übertragungsprotokolls im zweiten Übertragungsprotokoll aufweist und insbesondere als eigenständiges Modul zum Einstecken in einem entsprechenden Steckplatz der Telekommunikationseinrichtung ausgebildet ist.

7. Terminal-Schnittstellenvorrichtung zum Anschliessen eines Terminals an ein Kommunikationsnetz, **dadurch gekennzeichnet, dass** sie Mittel aufweist zum Tunneln eines ersten Übertragungsprotokolls, welches zur Übertragung von Daten zwischen dem Terminal und einer Telekommunikationseinrichtung nach einem der Ansprüche 1 bis 5 verwendet wird, in einem zweiten Übertragungsprotokoll, welches zur Übertragung von Daten über das Kommunikationsnetz verwendet wird.

8. Schnittstellenvorrichtung nach Anspruch 7, **dadurch gekennzeichnet, dass** sie neben einer Terminalschnittstelle zum Anschliessen eines Terminals und einer Netzschnittstelle zum Anschliessen an das Kommunikationsnetz eine Datenschnittstelle zum Anschliessen eines Datenverarbeitungsgerätes aufweist.

9. Verfahren zur Übertragung von Daten, insbesondere mit Übertragungsfrequenzen grösser als 1 MHz, über ein Kommunikationsnetz von einer Telekommunikationseinrichtung, insbesondere nach einem der Ansprüche 1 bis 5, zu einem Terminal bzw. umgekehrt, wobei zur Kommunikation zwischen der Telekommunikationseinrichtung und dem Terminal ein erstes Übertragungsprotokoll verwendet wird, **dadurch gekennzeichnet, dass** zur Übertragung der Daten über das Kommunikationsnetz ein zweites Übertragungsprotokoll verwendet wird, wobei das erste Übertragungsprotokoll in dem zweiten Übertragungsprotokoll durch das Kommunikationsnetz getunnelt wird.

10. Verfahren nach Anspruch 9, **dadurch gekennzeichnet, dass** vor der Übertragung der Daten eine Anmeldeprozedur durchgeführt wird, wobei für jedes Terminal eine Protokolladresse und eine Teilnehmeradresse vergeben wird.

11. Verfahren nach Anspruch 10, **dadurch gekennzeichnet, dass** die Protokolladresse automatisch vergeben wird.

12. Verfahren nach Anspruch 10 oder 11, **dadurch gekennzeichnet, dass** die Teilnehmeradresse insbesondere hard- oder softwaremässig am Terminal eingestellt und ein Benutzer des Terminals in der Telekommunikationseinrichtung anhand der Teilnehmeradresse identifiziert wird.

13. Verfahren nach einem der Ansprüche 10 bis 12, **dadurch gekennzeichnet, dass** ein Benutzer des Terminals, insbesondere indem der Benutzer ein Passwort eingibt, authentifiziert und das Terminal erst nach korrekter Authentifizierung des Benutzers freigeschaltet wird.

14. Verfahren nach einem der Ansprüche 9 bis 13, **dadurch gekennzeichnet, dass** die Daten zur Übertragung wahlweise moduliert, codiert, komprimiert und/oder verschlüsselt werden.
